# EUROPEAN PATENT APPLICATION

(11) **EP 4 535 260 A1**
(43) Date of publication of application: **09.04.2025**
(21) Application number: 24203953.5
(22) Date of filing: 01.10.2024
(51) Int. Cl.: G06Q 10/20, G07C 5/00

(54) **SYSTEMS AND METHODS FOR IDENTIFYING VEHICLE SERVICE CENTERS**

(30) Priority: 04.10.2023 US 202363542358 P
(71) Applicant: GEOTAB Inc., Oakville, ON L6H 7V2 (CA)
(72) Inventor: Santorelli, Michael Angelo David, L4K 3G7 Concord (CA); Raj, Lourd Ann, H4L 1X9 St. Laurent (CA); Tran, Anh Tuan, M5B 0A5 Toronto (CA)
(74) Representative: Fleuchaus & Gallo Partnerschaft mbB

(57) **Abstract**

Disclosed herein are systems and methods for identifying service centers. One of such methods may comprise operating at least one processor to: receive telematics data originating from a plurality of telematics devices installed in a plurality of vehicles; determine for each of the plurality of vehicles, using the telematics data, when a vehicle maintenance event has occurred by identifying at least a binary vehicle status indicator change, time-logged telematics data that meets a predetermined condition, an indication that a vehicle diagnosis has occurred, or a combination thereof; determine, using the telematics data, a location of each of the plurality of vehicles at a time at which the vehicle maintenance event occurred; and identify one or more service centers by: applying to a plurality of maintenance event locations a clustering model, and classifying one or more clusters of maintenance event locations as a service center.

## Description

### TECHNICAL FIELD

The present disclosure generally relates to the use of telematics data to provide geographical and/or infrastructural information. More specifically, the present disclosure relates to the identification of vehicle service centers using telematics data.

### BACKGROUND

Telematics data collected from vehicles may include information, parameters, attributes, characteristics, and/or features associated with the vehicles. For example, telematics data may include data relating to various components of the vehicle (e.g., airbag status, engine data, brake data, transmission data, and the like), location data (e.g., a GPS location), vehicle identifying information, etc.

While telematics data may be used to gain insights about various aspects of the vehicles from which it is collected, the telematics data may also be used to provide insights about the area or areas within which the vehicles operate. For example, using telematics data such as geospatial data and/or engine data, a user may be able to determine a location at which a vehicle stops, how long a vehicle is stopped at that location, etc. Using that information, a user such as a vehicle fleet manager may be able to determine the purpose of a vehicle stop. For example, it is often useful for a user to determine whether a vehicle has stopped for a maintenance at a vehicle service center.

However, conventionally, to determine whether a vehicle has stopped at a vehicle service center, information in addition to the telematics data collected from the vehicle is often required. For example, a user may have to compare a GPS location of a vehicle to map data provided by an external map data provider (e.g., OSM) to determine whether a vehicle has stopped for maintenance. As will be appreciated, such map data may not always be available, may not always be up to date, and/or may require a user to manually confirm whether a vehicle is stopped at a vehicle service center (e.g., a visual confirmation), which, in turn, may lead to errors or inconsistencies when determining whether a vehicle is stopped at a vehicle service center, additional time spent by a user to determine whether a vehicle is stopped at a service centre, as well as additional costs resulting therefrom.

A need therefore exists for improved systems and methods for identifying vehicle service centers using telematics data.

### SUMMARY

In one aspect, the present disclosure relates to a system for identifying a service center, the system comprising: at least one data storage operable to store telematics data originating from a plurality of telematics devices installed in a plurality of vehicles; and at least one processor in communication with the at least one data storage, the at least one processor operable to: receive the telematics data; determine for each of the plurality of vehicles, using the telematics data, when a vehicle maintenance event has occurred by identifying at least a binary vehicle status indicator change, time-logged telematics data that meets a predetermined condition, a vehicle diagnosis indicator, or a combination thereof; determine, using the telematics data, a location of each of the plurality of vehicles at a time at which the vehicle maintenance event occurred; and identify one or more service centers by: applying to a plurality of maintenance event locations a clustering model, and classifying one or more clusters of maintenance event locations as a service center.

According to an embodiment, the at least one processor is operable to identify the binary vehicle status indicator change by identifying a change in vehicle warning lights, a change in diagnostic trouble codes (DTCs), or a combination thereof.

According to an embodiment, the time-logged telematics data comprises engine oil quality data, battery data, fluid level data, or a combination thereof.

According to an embodiment, the predetermined condition comprises an increase in engine oil quality and/or a fluid level that is greater than a predetermined threshold.

According to an embodiment, the vehicle service indicator comprises a vehicle diagnosis indicator, a vehicle tow indicator, or a combination thereof.

According to an embodiment, the binary vehicle status indicator change, the time-logged telematics data meeting the predetermined condition occur, and/or the vehicle service indicator occur during an ignition cycle.

According to an embodiment, the at least one processor is operable to determine the location of the vehicle maintenance event by: identifying a first location reported immediately before when the binary vehicle status indicator change occurred, the time-logged engine data meets the predetermined condition, and/or the vehicle service indicator has occurred, and a second location reported when, or immediately after, the binary vehicle status indicator change occurred, the time-logged engine data meets the predetermined condition, and/or the vehicle service indicator has occurred, and determining the location of the vehicle maintenance event based on whether the first location and the second location are within a selected distance of each other, based on an average location of the first location and the second location, or a combination thereof.

According to an embodiment, the at least one processor is further operable to determine the location of vehicle maintenance event by: identifying an end cycle location of an immediately preceding ignition cycle and a starting cycle location of a current ignition cycle; and determining the location of the vehicle maintenance event based on whether the first location, the second location, the end cycle location, and the starting cycle location are within a selected distance of each other, based on an average location of the first location, the second location, the end cycle location, and the starting cycle location, or a combination thereof.

According to an embodiment, the at least one processor is further operable to determine the location of the vehicle maintenance event based on an ignition cycle duration of the vehicle being greater than or equal to a predetermined time threshold.

According to an embodiment, the at least one processor is operable to classify the one or more clusters of maintenance event locations as a service center using a machine learning model trained using one or more vehicle maintenance features.

According to an embodiment, the one or more vehicle maintenance features comprise a number of distinct vehicles having one or more vehicle maintenance events occur at the maintenance event location, an average time spent by the vehicles at the maintenance event location, an average vehicle ignition cycle time of the vehicles at the maintenance event location, a number of distinct vehicle maintenance event types occurring at the maintenance event location, a number of vehicle maintenance events occurring within a selected time period at the maintenance event location, a percentage of time within which a vehicle maintenance event occurs at the maintenance event location, or a combination thereof.

According to an embodiment, the machine learning model comprises an anomaly detection model.

In another aspect, the present disclosure relates to a system for training a machine learning model to identify a service center, the system comprising: at least one data storage operable to store telematics data originating from a plurality of telematics devices installed in a plurality of vehicles; and at least one processor in communication with the at least one data storage, the at least one processor operable to: receive the telematics data; determine for each of the plurality of vehicles, using the engine data, when a vehicle maintenance event has occurred by identifying at least a binary vehicle status indicator change, time-logged telematics data that meets a predetermined condition, a vehicle service indicator, or a combination thereof; determine, using the telematics data, a location of each of the plurality of vehicles at a time at which the vehicle maintenance event occurred; identify one or more potential service center zones at least in part by applying to a plurality of maintenance event locations a clustering model; identify each of the one or more potential service center zones that overlaps with a labelled service center zone; determine one or more vehicle maintenance features based on each of the one or more potential service center zones that overlaps with the labelled service center zone; and input the one or more vehicle maintenance features into the machine learning model to thereby train the machine learning model to identify service centers based on the one or more vehicle maintenance features.

According to an embodiment, the at least one processor is further operable to validate the machine learning model by: identifying, using the machine learning model, one or more service center locations; and determining whether each of the one or more service center locations overlaps with a labelled service center zone location.

According to an embodiment, the at least one processor is further operable to update the one or more vehicle maintenance features based on each of the one or more service center locations that overlap with a labelled service center zone.

According to an embodiment, the at least one processor is further operable to repeat the validation of the machine learning model and the updating of the one or more vehicle maintenance features at a predetermined cadence.

According to an embodiment, the at least one processor is further operable to receive map data comprising labelled service center zones.

According to an embodiment, the at least one processor is further operable to receive user-submitted labelled service center zones.

In another aspect, the present disclosure relates to a method for identifying a service center, the method comprising operating at least one processor to: receive telematics data originating from a plurality of telematics devices installed in a plurality of vehicles; determine for each of the plurality of vehicles, using the telematics data, when a vehicle maintenance event has occurred by identifying at least a binary vehicle status indicator change, time-logged telematics data that meets a predetermined condition, a vehicle service indicator, or a combination thereof; determine, using the telematics data, a location of each of the plurality of vehicles at a time at which the vehicle maintenance event occurred; and identify one or more service centers by: applying to a plurality of maintenance event locations a clustering model, and classifying one or more clusters of maintenance event locations as a service center.

According to an embodiment, the identifying of the binary vehicle status indicator change comprises operating the at least one processor to identify the binary vehicle status indicator change by identifying a change in vehicle warning lights, a change in diagnostic trouble codes (DTCs), or a combination thereof.

According to an embodiment, the time-logged telematics data comprises engine oil quality data, battery data, fluid level data, or a combination thereof.

According to an embodiment, the predetermined condition comprises an increase in engine oil quality and/or a fluid level that is greater than a predetermined threshold.

According to an embodiment, the vehicle service indicator comprises a vehicle diagnosis indicator, a vehicle tow indicator, or a combination thereof.

According to an embodiment, the binary vehicle status indicator change, the time-logged telematics data meeting the predetermined condition occur, and/or the vehicle service indicator occur during an ignition cycle.

According to an embodiment, the determining of the location of the vehicle maintenance event comprises operating the at least one processor to: identify a first location reported immediately before when the binary vehicle status indicator change occurred, the time-logged engine data meets the predetermined condition, and/or the vehicle service indicator has occurred, and a second location reported when, or immediately after, the binary vehicle status indicator change occurred, the time-logged engine data meets the predetermined condition, and/or the vehicle service indicator has occurred, and determine the location of the vehicle maintenance event based on whether the first location and the second location are within a selected distance of each other, based on an average location of the first location and the second location, or a combination thereof.

According to an embodiment, the determining of the location of the vehicle maintenance event further comprises operating the at least one processor to: identify an end cycle location of an immediately preceding ignition cycle and a starting cycle location of a current ignition cycle; and determine the location of the vehicle maintenance event based on whether the first location, the second location, the end cycle location, and the starting cycle location are within a selected distance of each other, based on an average location of the first location, the second location, the end cycle location, and the starting cycle location, or a combination thereof.

According to an embodiment, the determining of the location of the vehicle maintenance event is based on an ignition cycle duration of the vehicle being greater than or equal to a predetermined time threshold.

According to an embodiment, the classifying of the one or more clusters of maintenance event locations as the service center comprises operating the at least one processor to use a machine learning model trained using one or more vehicle maintenance features.

According to an embodiment, the one or more vehicle maintenance features comprise a number of distinct vehicles having one or more vehicle maintenance events occur at the maintenance event location, an average time spent by the vehicles at the maintenance event location, an average vehicle ignition cycle time of the vehicles at the maintenance event location, a number of distinct vehicle maintenance event types occurring at the maintenance event location, a number of vehicle maintenance events occurring within a selected time period at the maintenance event location, a percentage of time within which a vehicle maintenance event occurs at the maintenance event location, or a combination thereof.

According to an embodiment, the machine learning model comprises an anomaly detection model.

In another aspect, the present disclosure relates to a method for training a machine learning model to identify a service center, the method comprising operating at least one processor to: receive telematics data telematics data originating from a plurality of telematics devices installed in a plurality of vehicles, the telematics data comprising at least engine data and geospatial data associated with each of the plurality of vehicles; determine for each of the plurality of vehicles, using the engine data, when a vehicle maintenance event has occurred by identifying at least a binary vehicle status indicator change, time-logged telematics data that meets a predetermined condition, a vehicle service indicator, or a combination thereof; determine, using the telematics data, a location of each of the plurality of vehicles at a time at which the vehicle maintenance event occurred; identify one or more potential service center zones at least in part by applying to a plurality of maintenance event locations a clustering model; identify each of the one or more potential service center zones that overlaps with a labelled service center zone; determine one or more vehicle maintenance features based on each of the one or more potential service center zones that overlaps with the labelled service center zone; and input the one or more vehicle maintenance features into the machine learning model to thereby train the machine learning model to identify service centers based on the one or more vehicle maintenance features.

According to an embodiment, the method further comprises operating the at least one processor to validate the machine learning model by: identifying, using the machine learning model, one or more service center locations; and determining whether each of the one or more service center locations overlaps with a labelled service center zone location.

According to an embodiment, the method further comprises operating the at least one processor is further operable to update the one or more vehicle maintenance features based on each of the one or more service center locations that overlap with a labelled service center zone.

According to an embodiment, the method further comprises operating the at least one processor to repeat the validation of the machine learning model and the updating of the one or more vehicle maintenance features at a predetermined cadence.

According to an embodiment, the method further comprises operating the at least one processor to receive map data comprising labelled service center zones.

According to an embodiment, the method further comprises operating the at least one processor to receive user-submitted labelled service center zones.

In another aspect, the present disclosure relates to a non-transitory computer-readable medium having instructions stored thereon executable by at least one processor to implement the methods described herein.

Other aspects and features of the systems and methods of the present disclosure will become apparent to those ordinarily skilled in the art upon review of the following description of specific embodiments.

### BRIEF DESCRIPTION OF THE DRAWINGS

These and other features of the present disclosure will become more apparent in the following detailed description in which reference is made to the appended drawings. The appended drawings illustrate one or more embodiments of the present disclosure by way of example only and are not to be construed as limiting the scope of the present disclosure.
FIG. 1 is a block diagram of various components interacting with an example fleet management system according to an embodiment of the present disclosure.
FIG. 2 is a block diagram of an example fleet management system interacting with an example telematics device and an example vehicle, according to an embodiment of the present disclosure.
FIG. 3 is a block diagram of an example computing device interacting with an example fleet management system, according to an embodiment of the present disclosure.
FIG. 4 is a flowchart of an example method for identifying a service center, according to an embodiment of the present disclosure.
FIG. 5 is a flowchart of an example method for training a machine learning model to identify a service center, according to an embodiment of the present disclosure.

### DETAILED DESCRIPTION

Telematics data may be used not only to provide information about a vehicle, but also to provide insights about an area within which the vehicle operates. For example, using telematics data such as geospatial data and/or engine data, a user may be able to determine a location at which a vehicle stops, how long a vehicle is stopped at that location, and the like.

As will be appreciated, for a user such as a vehicle fleet manager, it may also be useful to identify the purpose of a vehicle stop. For example, it is often useful for a user to determine whether a vehicle has stopped at a service center (i.e., a location that maintains and/or services a vehicle) for maintenance. However, conventionally, a user may have to rely on externally provided information, in addition to the telematics data, to determine whether a vehicle has stopped at a service center. For instance, a user may typically have to compare a GPS location of a vehicle to map data provided by an external map data provider (e.g., OSM) to determine whether a vehicle has stopped at a vehicle service center versus, for example, a supplier parking lot, a customer parking lot, a gas station, etc.

As will be appreciated, externally provided information, such as map data, may not always be available, may not always be up to date, and/or may require a user to manually confirm whether a vehicle is stopped at a vehicle service center (e.g., by way of a visual confirmation), which, in turn, may lead to errors or inconsistencies when determining whether a vehicle is stopped at a vehicle service center (e.g., versus some other location), additional time spent by a user to determine whether a vehicle is stopped at a service centre, as well as additional costs resulting therefrom.

Thus, it is an objective of the present disclosure to provide advantageous systems and methods for identifying vehicle service centers that are capable of avoiding the shortcomings of the conventional techniques. For example, in some embodiments, the systems and methods of the present disclosure are capable of automatically identifying vehicle service centers using telematics data. That is, the systems and methods described herein may not rely on externally provided information, such as map data, to identify a vehicle service center. In such embodiments, error arising from, for example, unavailable or not up to date map data may be mitigated. As well, the process for identifying the service centers may be streamlined, as a user may not need to manually confirm that a vehicle is stopped at a service center.

Additional advantages will be discussed below and will be readily apparent to those of ordinary skill in the art upon reading the present disclosure.

Reference will now be made in detail to example embodiments of the disclosure, wherein numerals refer to like components, examples of which are illustrated in the accompanying drawings that further show example embodiments, without limitation.

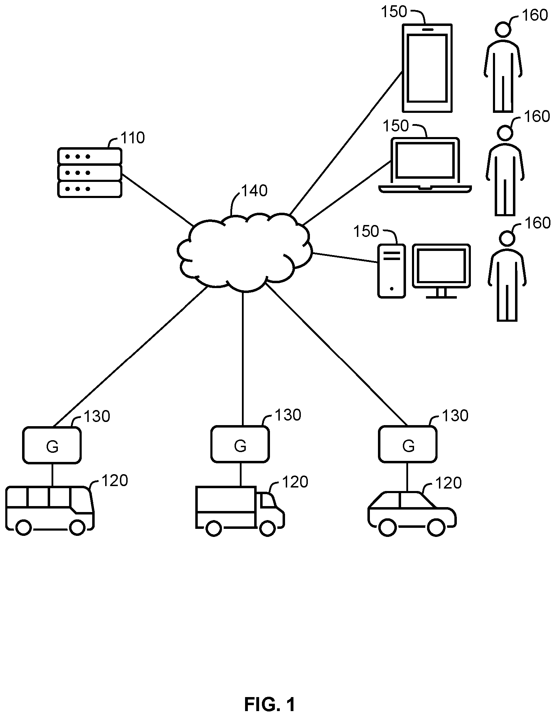

Referring now to FIG. 1, there is shown an example of a fleet management system 110 for managing a plurality of assets equipped with a plurality of telematics devices 130. Each of the telematics devices 130 is capable of collecting various data from the vehicles 120 (i.e., telematics data) and sharing the telematics data with the fleet management system 110. The fleet management system 110 may be remotely located from the telematics devices 130 and the vehicles 120.

The vehicles 120 may include any type of vehicle. For example, the vehicles 120 may include motor vehicles such as cars, trucks (e.g., pickup trucks, heavy-duty trucks such as class-8 vehicles, etc.), motorcycles, industrial vehicles (e.g., buses), and the like. Each motor vehicle may be a gas, diesel, electric, hybrid, and/or alternative fuel vehicle. Further, the vehicles 120 may include vehicles such as railed vehicles (e.g., trains, trams, and streetcars), watercraft (e.g., ships and recreational pleasure craft), aircraft (e.g., airplanes and helicopters), spacecraft, and the like. Each of the vehicles 120 may be equipped with one of the telematics devices 130.

Further, it is noted that, while only three vehicles 120 having three telematics devices 130 are shown in the illustrated example, it will be appreciated that there may be any number of vehicles 120 and telematics devices 130. For example, the fleet management system 110 may manage hundreds, thousands, or even millions of vehicles 120 and telematics devices 130.

In some embodiments, the telematics devices 130 may be standalone devices that are removably installed in the vehicles 120 (e.g., aftermarket telematics devices). In other embodiments, the telematics devices 130 may be integrated components of the vehicles 120 (e.g., pre-installed by an OEM). As described herein, the telematics devices 130 may collect various telematics data and share the telematics data with the fleet management system 110. The telematics data may include any information, parameters, attributes, characteristics, and/or features associated with the vehicles 120. For example, the vehicle data may include, but is not limited to, location data, speed data, acceleration data, fluid level data (e.g., oil, coolant, and washer fluid), energy data (e.g., battery and/or fuel level), engine data, brake data, transmission data, odometer data, vehicle identifying data, error/diagnostic data, tire pressure data, seatbelt data, airbag data, or a combination thereof. In some embodiments, the telematics data may include information relating to the telematics devices 130 and/or other devices associated with or connected to the telematics devices 130. Regardless, it should be appreciated the telematics data is a form of electronic data that requires a computer (e.g., a processor such as those described herein) to transmit, receive, interpret, process, and/or store.

Once received, the fleet management system 110 may process the telematics data obtained from the telematics devices 130 to provide various analysis, predictions, reporting, etc. In some embodiments, the fleet management system 110 may process the telematics data to provide additional information about the vehicles 120, such as, but not limited to, trip distances and times, idling times, harsh braking and driving, usage rates, fuel economy, and the like. Various data analytics may be implemented to process the telematics data. The telematics data may then be used to manage various aspects of the vehicles 120, such as route planning, vehicle maintenance, driver compliance, asset utilization, fuel management, etc., which, in turn, may improve productivity, efficiency, safety, and/or sustainability of the vehicles 120.

A plurality of computing devices 150 may provide access to the fleet management system 110 to a plurality of users 160. The users 160 may use computing devices 150 to access or retrieve various telematics data collected and/or processed by the fleet management system 110 to manage and track the vehicles 120. As will be appreciated, the computing devices 150 may be any suitable computing devices. For example, the computing devices 150 may be any type of computers such as, but not limited to, personal computers, portable computers, wearable computers, workstations, desktops, laptops, smartphones, tablets, smartwatches, personal digital assistants (PDAs), mobile devices, and the like. The computing devices 150 may be remotely located from the fleet management system 110, telematic devices 130, and vehicles 120.

The fleet management system 110, telematics devices 130, and computing devices 150 may communicate through a network 140. The network 140 may comprise a plurality of networks and may be wireless, wired, or a combination thereof. As will be appreciated, the network 140 may employ any suitable communication protocol and may use any suitable communication medium. For example, the network 140 may comprise Wi-Fi^{™} networks, Ethernet networks, Bluetooth^{™} networks, near-field communication (NFC) networks, radio networks, cellular networks, and/or satellite networks. The network 140 may be public, private, or a combination thereof. For example, the network 140 may comprise local area networks (LANs), wide area networks (WANs), the internet, or a combination thereof. Of course, as will also be appreciated, the network 140 may also facilitate communication with other devices and/or systems that are not shown.

Further, the fleet management system 110 may be implemented using one or more computers. For example, the fleet management system 110 may be implements using one or more computer servers. The servers may be distributed across a wide geographical area. In some embodiments, the fleet management system 110 may be implemented using a cloud computing platform, such as Google Cloud Platform^{™} and Amazon Web Services^{™}. In other embodiments, the fleet management system 110 may be implemented using one or more dedicated computer servers. In a further embodiment, the fleet management system 110 may be implemented using a combination of a cloud computing platform and one or more dedicated computer servers.

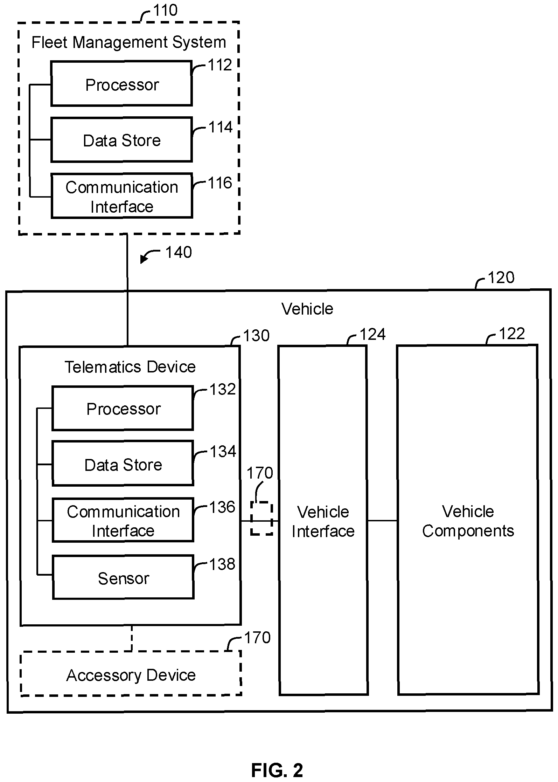

Referring now to FIG. 2, there is illustrated the fleet management system 110 in communication with one of the telematics devices 130 that is installed in one of the vehicles 120. As shown, the fleet management system 110 may include a processor 112, a data storage 114, and a communication interface 116, each of which may communicate with each other. The processor 112, the data storage 114, and the communication interface 116 may be combined into fewer components, divided into additional subcomponents, or a combination thereof. The components and/or subcomponents may not necessarily be distributed in proximity to one another and may instead be distributed across a wide geographical area.

The processor 112 may control the operation of the fleet management system 110. As will be appreciated, the processor 112 may be implemented using one or more suitable processing devices or systems. For example, the processor 112 may be implemented using central processing units (CPUs), graphics processing units (GPUs), field programmable gate arrays (FPGAs), application specific integrated circuits (ASICs), digital signal processors (DSPs), neural processing units (NPUs), quantum processing units (OPUs), microprocessors, controllers, and the like. The processor 112 may execute various instructions, programs, software, or a combination thereof stored on the data storage 114 to implement various methods described herein. For example, the processor 112 may process various telematics data collected by the fleet management system 110 from the telematics devices 130.

Various data for the fleet management system 110 may be stored on the data storage 114. The data storage 114 may be implemented using one or more suitable data storage devices or systems such as random-access memory (RAM), read only memory (ROM), flash memory, hard disk drives (HDDs), solid-state drives (SSDs), magnetic tape drives, optical disc drives, memory cards, and the like. The data storage 114 may include volatile memory, nonvolatile memory, or a combination thereof. Further, the data storage 114 may comprise non-transitory computer readable media. The data storage 114 may store various instructions, programs, and/or software that are executable by the processor 112 to implement various methods described herein. The data storage 114 may store various telematics data collected from the telematics devices 130 and/or processed by the processor 112.

The communication interface 116 may enable communication between the fleet management system 110 and other devices and/or systems, such as the telematics devices 130. The communication interface 116 may be implemented using any suitable communications devices and/or systems. For example, the communication interface 116 may comprise one or more various physical connectors, ports, or terminals such as universal serial bus (USB), ethernet, Thunderbolt, Firewire, serial advanced technology attachment (SATA), peripheral component interconnect (PCI), high-definition multimedia interface (HDMI), DisplayPort, and the like. As another example, the communication interface 116 may comprise one or more wireless interface components to connect to wireless networks such as Wi-Fi^{™}, Bluetooth^{™}, NFC, cellular, satellite, and the like. The communication interface 116 may enable various inputs and outputs to be received at and sent from the fleet management system 110. For example, the communication interface 116 may be used to telematics data from the telematics devices 130.

The telematics devices 130 also may include a processor 134, a data storage 134, and a communication interface 136. The telematics devices 130 may also comprise a sensor 138. Each of the components of the telematics devices 130 may communicate with each other and may be combined into fewer components or divided into additional subcomponents.

The processor 132 may control the operation of the telematics device 130. The processor 132 may be implemented using any suitable processing devices or systems, such as those described above in relation to the processor 112 of the fleet management system 110. The processor 132 may execute various instructions, programs, software, or a combination thereof stored on the data storage 134 to implement various methods described herein. For example, the processor 132 may process various telematics data obtained from vehicle components 122 and/or the sensor 138.

The data storage 134 may store various data for the telematics device 130. The data storage 134 may be any suitable data storage device or system, such as those described above in relation to the data storage 114 of the fleet management system 110. The data storage 134 may store various instructions, programs, software, or a combination thereof executable by the processor 132 to implement various methods described herein. As well, the data storage 134 may store various telematics data obtained from the vehicle components 122 and/or the sensor 138.

The communication interface 136 may enable communication between the telematics devices 130 and other devices or systems, such as the fleet management system 110 and the vehicle components 122. The communication interface 136 may comprise any suitable communication devices or systems, such as those described above in relation to the communication interface 116 of the fleet management system 110. The communication interface 136 may enable various inputs and outputs to be received at and sent from the telematics devices 130. For example, the communication interface 136 may be used to collect vehicle data from the vehicle components 122 and/or sensor 138, to send vehicle data to the fleet management system 110, etc.

The sensor 138 may detect and/or measure various environmental events, changes, etc. The sensor 138 may include any suitable sensing devices or systems, such as, but not limited to, location sensors, velocity sensors, acceleration sensors, orientation sensors, vibration sensors, proximity sensors, temperature sensors, humidity sensors, pressure sensors, optical sensors, audio sensors, and combinations thereof. When the telematics device 130 is installed in the vehicle 120, the sensor 138 may be used to collect telematics data that may not be obtainable from the vehicle components 122. For example, the sensor 138 may include a satellite navigation device such as a global positioning system (GPS) receiver that may measure the location of the vehicle 120. In some embodiments, the sensor 138 may comprise accelerometers, gyroscopes, magnetometers, inertial measurement units (IMUs), or the like that may measure the acceleration and/or orientation of the vehicle 120.

In some embodiments, the telematics devices 130 may operate in conjunction with one or more accessory devices 170 that are in communication therewith. The accessory devices 170 may include one or more expansion devices that may provide additional functionality to the telematics devices 130. For example, the accessory devices 170 may provide additional processing storage, communication, and/or sensing functionality through one or more additional processors, data storages, communication interfaces, and/or sensors (not pictured). The accessory devices 170 may also include adaptor devices that facilitate communication between the communication interface 136 and one or more vehicle interfaces 124, such as a cable harness. The one or more accessory devices 170 may be installed in the vehicle 120 along with the telematics devices 130.

As described herein, the telematics device 130 may be installed within the vehicle 120 removably or integrally. The vehicle 120 may include the vehicle components 122 and the one or more vehicle interfaces 124, which, as will be appreciated, may be combined into fewer components or divided into additional subcomponents. In some embodiments, the vehicle components 122 may comprise any subsystems, parts, subcomponents, or combinations thereof of the vehicle 120. For example, the vehicle components 122 may comprise powertrains, engines, transmissions, steering, braking, seating, batteries, doors, suspensions, etc. The telematics device 130 may obtain various telematics data from the vehicle components 122. For example, in some embodiments, the telematics device 130 may communicate with one or more electrical control units (ECUs) that control the vehicle components 122 or one or more internal sensors thereof.

The vehicle interface 124 may facilitate communication between the vehicle components 122 and other devices or systems. As well, the vehicle interface 124 may comprise any suitable communication devices or systems. For example, the vehicle interface 124 may include an on-board diagnostics (OBD-II) port and/or controller area network (CAN) bus port. The vehicle interface 124 may be used by the telematics device 130 to obtain telematics data from the vehicle components 122. For example, the communication interface 136 may be connected to the vehicle interface 124 to communicate with the vehicle components 122. In some embodiments, the one or more accessory devices 170 (e.g., a wire harness) may provide the connection between the communication interface 136 and the vehicle interface 124.

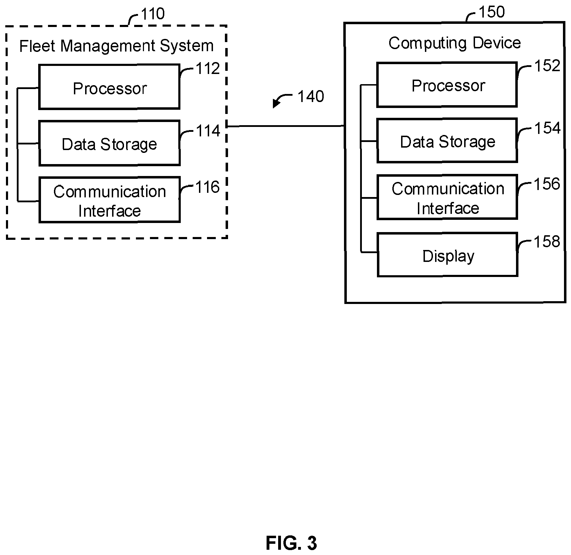

Referring now to FIG. 3, there is shown the fleet management system 110 in communication with the computing devices 150. As shown, the computing device 150 may also include a processor 152, a data storage 153, and a communication interface 156. As well, the computing device 150 may include a display 158. Each of the components of the computing device 150 may be communicate with each other and may be combined into fewer components or divided into additional subcomponents.

The processor 152 may control the operation of the computing device 150. The processor 152 may be implemented using any suitable processing devices or systems, such as those described above in relation to the processor 112 of the fleet management system 110. The processor 152 may execute various instructions, programs, software, or a combination thereof stored on the data storage 154 to implement various methods described herein. For example, the processor 152 may process various telematics data received from the fleet management system 110, the telematics devices 130, or a combination thereof.

The data storage 154 may store various data for the computing device 150. The data storage 150 may be any suitable data storage device or system, such as those described above in relation to the data storage 114 of the fleet management system 110. The data storage 154 may store various instructions, programs, software, or a combination thereof executable by the processor 152 to implement various methods described herein. As well, the data storage 154 may store various telematics data received from the fleet management system 110, the telematics devices 130, or a combination thereof.

The communication interface 156 may enable communication between the computing device 150 and other devices or systems, such as the fleet management system 110. The communication interface 156 may be any suitable communication device or system, such as those described above in relation to the communication interface 116 of the fleet management system 110. The communication interface 156 may enable various inputs and outputs to be received at and sent from the computing device 150. For example, the communication interface 156 may be used to retrieve telematics data the fleet management system 110.

The displays 158 may visually present various data for the computing device 150. The displays 158 may be implemented using any suitable display devices or systems, such as, but not limited to, light-emitting diode (LED) displays, liquid crystal displays (LCD), electroluminescent displays (ELDs), plasma displays, quantum dot displays, cathode ray tube (CRT) displays, and the like. The display 158 may be an integrated component that is integral with the computing device 150 or a standalone device that is removable connected to the computing device 150. The display 158 may display various visual representations of the telematics data.

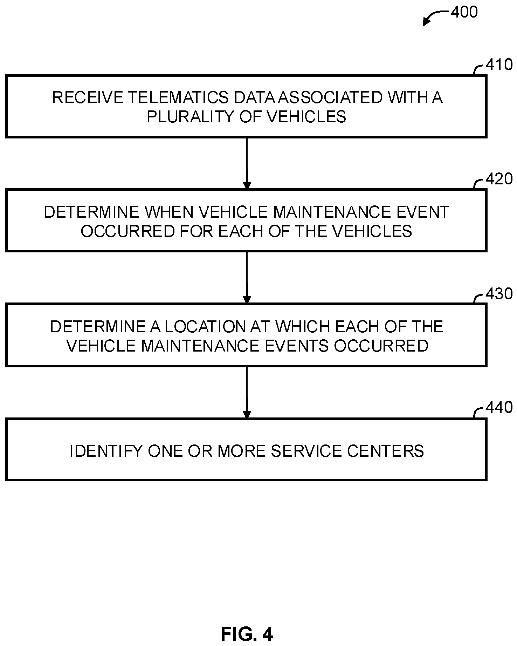

Referring now to FIG. 4, there is shown a flow chart of an example method for identifying a service center (400) according to an embodiment of the present disclosure. As shown, the method 400 may comprise operating at least one processor to: receive telematics data originating from a plurality of telematics devices installed in a plurality of vehicles (410); determine for each of the plurality of vehicles, using the telematics data, when a vehicle maintenance event has occurred by identifying at least an engine status change, time-logged telematics data that meets a predetermined condition, a vehicle service indicator, or a combination thereof (420); determine, using the telematics data, a location of each of the plurality of vehicles at a time at which the vehicle maintenance event occurred (430); and identify one or more service centers by: applying to a plurality of maintenance event locations a clustering model, and classifying one or more clusters of maintenance event locations as a service center (440).

The method 400 may be implemented using any suitable combination of hardware and software, such as those described in reference to FIG. 1 to FIG. 3. For example, one or more operations (e.g., operations 410, 420, 430, and/or 440) of the method 400 may be implemented at the fleet management system 110 (e.g., by the processor 112 executing instructions stored on the data storage 114), at the telematics devices 130 (e.g., by the processor 132 executing instructions stored on the data storage 134), at the computing devices 150 (e.g., by the processor 152 executing instructions stored on the data storage 154), or a combination thereof. As will be appreciated, because the systems and methods of the present disclosure may involve the processing of large amounts of telematics data (e.g., telematics data originating from a vehicle fleet of tens, hundreds, or even thousands of vehicles), the systems and methods of the present disclosure require implementation via a computer (e.g., one or more of the processors 112, 132, and 152).

In embodiments where at least a portion of the method 400 is implemented by a fleet management system (e.g., the fleet management system 110), less processing may be executed by telematics devices (e.g., the telematics devices 130) and/or other computing devices (e.g., the computing devices 150). As a result, the hardware complexity of the telematics devices and/or the other computing devices may be reduced, which, in turn, may reduce the costs associated therewith. As well, it may also in some cases be easier to update and/or modify software running on a fleet management system as compared to telematics devices and/or other computing devices. On the other hand, in embodiments where at least a portion of the method 400 is implemented by telematics devices, less data may be transmitted to a fleet management system and/or other computing devices, thereby reducing network usage and network bandwidth. As will be appreciated, in such implementations, usage costs associated with network usage may in turn also be reduced. Thus, the method 400 may be implemented in a variety of ways and each implementation may have advantages associated therewith.

As shown in FIG. 4 at 410, telematics data originating from a plurality of telematics devices installed in a plurality of vehicles may be received. The telematics data may be obtained from the plurality of vehicles using, for example, one or more of the systems outlined in FIG. 1 to FIG. 3. For example, the telematics device 130 (e.g., the processor 132) may receive telematics data from the sensor 138, vehicle components 122, or a combination thereof. Alternatively, or additionally, the fleet management system 110 (e.g., the processor 112) may receive telematics data from the telematics device 130. Additionally, or alternatively, the computing device 150 (e.g., the processor 152) may receive telematics data from the telematics device 130 and/or the fleet management system 110. Additionally, or alternatively, the telematics device 130, the fleet management system 110, and/or the computing device 150 may receive telematics data from one or more data storages (e.g., one or more of the data storages 114, 134, 154).

As described herein, the telematics data may be used to determine whether a vehicle maintenance event has occurred based on various indicators therewithin. For example, the occurrence of a vehicle maintenance event may be determined based on, for example, engine status changes, various types of time-logged telematics data (i.e., telematics data that is reported at a regular, or irregular, frequency indicating how a particular vehicle parameter changes over time), and/or a vehicle service indicator. Thus, the telematics data may include data such as, but not limited to, engine data (e.g., including engine status data, engine oil quality data, etc.), battery data (e.g., relating to a charge level of the battery of the vehicle), vehicle diagnostic data (e.g., whether a vehicle diagnostic tool such as a scan tool has been connected to a vehicle interface), data relating to the telematics device (e.g., whether the telematics device has been removed to provide access to a vehicle interface), etc. As will be appreciated, the particular types of data included in the telematics data may be selected based on the particular implementation of the systems and methods of the present disclosure and/or the needs of a user. For example, a fleet of electric vehicles may produce different types of telematics data than a fleet of combustion engine vehicles.

Further, the telematics data may also be used to determine a location of a vehicle at a time of the vehicle maintenance event. Thus, the telematics data may generally include geospatial data (e.g., GPS coordinates, speed data, etc.) associated with the vehicle.

In some embodiments, the telematics data may be preprocessed prior to and/or subsequently to being received. For example, the telematics data may be received in one or more various formats, standards, or protocols. In some cases, it may be beneficial to reformat the telematics data prior to use in the systems and methods of the present disclosure. As a further example, the telematics data may include datapoints reported at irregular frequencies and/or that correspond to mismatched points in time. In such cases, the telematics data may be interpolated so that the datapoints in each time series correspond to successive and/or equally spaced points in time. As a yet further example, and as will be described herein, the telematics data may be curve-logged telematics data, which may result in a reduced number of received datapoints. In such implementations, the reduced number of datapoints may be interpolated to provide a fulsome dataset.

At operation 420 of the method 400, when a vehicle maintenance event has occurred for each of the plurality of vehicles may be determined using the telematics data. The occurrence of the vehicle maintenance event may be determined by identifying at least a binary vehicle status indicator change, time-logged telematics data that meets a predetermined condition, a vehicle service indicator, or a combination thereof - e.g., by one or more of the processors 112, 132, 152. As will be appreciated, a vehicle maintenance event may include any maintenance and/or service performed on or provided to a vehicle to maintain or improve the vehicle's operability.

In more detail, many vehicles may indicate the status of various aspects of their operation (e.g., their engine's operation) via one or more binary indicators (i.e., an indicator that is "on" or "off"). For example, a vehicle may indicate that the engine oil thereof has reached a minimum pressure via a warning light displayed on the dashboard thereof. As another example, a vehicle may indicate that there is an intake air temperature sensor circuit malfunction via a diagnostic trouble code (DTC) for use by a vehicle mechanic. A change in such a vehicle status indicator may therefore indicate that a vehicle maintenance event has occurred (e.g., a "check engine" indicator has changed from "on" to "off"). Such binary vehicle status indicator changes may be included in the telematics data reported by the vehicle, and may therefore include binary vehicle status indicator changes such as, but not limited to, a change in warning lights (e.g., a "check engine" indicator in a vehicle dashboard), a change in DTCs (e.g., the presence or absence of a particular DTC), etc.

As indicated herein, various types of telematics data may be collected from a vehicle and time-logged such that various vehicle parameters, properties, or the like may be monitored over time. Examples of such types of time-logged telematics data may include, but are not limited to, engine oil quality data, battery data, fluid level data (e.g., fuel, coolant, and washer fluid levels), tire pressure data, etc. Changes in the various types of time-logged telematics data may therefore indicate that a vehicle maintenance event has occurred.

In more detail, the time-logged telematics data may be processed and/or analyzed (e.g., by one or more of the processors 112, 132, 152) to determine whether a predetermined condition (e.g., that is indicative of a vehicle maintenance event occurring) has been met. The predetermined condition that may be indicative of a vehicle maintenance event may be different for different types of time-logged telematics data. For example, for time-logged engine oil quality data, an increase in engine oil quality that is greater than a predetermined threshold at a particular time may indicate that the engine oil of the vehicle has been changed (i.e., a vehicle maintenance event). As another example, for battery voltage, a return to a normal resting battery voltage (e.g., 12.6V for some vehicles) after an abnormal resting battery voltage has been reported for a period of time may indicate that a new battery was installed in the vehicle (i.e., a vehicle maintenance event).

As described herein, a vehicle service indicator (i.e., an indicator present within, or derived from, the telematics data that indicates a vehicle visited a vehicle service center) may also be indicative of a vehicle maintenance event occurring. One non-limiting example of a vehicle service indicator includes a vehicle diagnosis indicator. In more detail, a variety of vehicle issues and/or malfunctions may be diagnosed in modern vehicles using a diagnostic tool (e.g., a "scan tool") that is able to access data produced by the vehicle via an interface thereof (e.g., the vehicle interface 124) such as an ODB-II and/or CAN bus port. Such tools may be used to identify DTCs that may be interpreted by, for example, a vehicle mechanic to diagnose any issues with the vehicle's operation. Telematics devices (e.g., the telematics device 130) may be capable of detecting that a diagnostic tool has been implemented to diagnose a vehicle - e.g., by detecting that another device has connected to an interface or network of the vehicle, by detecting that the telematics device has been removed from the vehicle interface for a period of time, etc. As will be appreciated, a vehicle diagnosis indicator (e.g., a detection of a diagnostic tool) may, in turn, be indicative that a vehicle maintenance event has also occurred.

Another non-limiting example of a vehicle service indicator may include a vehicle tow indicator - i.e., an indicator that is associated with the towing of a vehicle. As will be appreciated, vehicles may be rendered inoperable during use (e.g., due to a collision, a part failure, etc.) and may require a tow to a service center for maintenance. Thus, a vehicle tow indicator may, in turn, indicate that a vehicle maintenance event has occurred. A vehicle tow indicator may be determined by, for example, identifying a change in vehicle location between ignition cycles thereof.

However, in some cases, the data produced by a vehicle during operation thereof may be "noisy" - i.e., may include random, meaningless variations in the data produced thereby. As will be appreciated, noisy data may be more challenging to process, as meaningful data may have to be discerned from the random, meaningless data variations. Thus, it may in some cases be useful to consider factors in addition to those described above when determining that a vehicle maintenance event has occurred. For example, vehicle maintenance may generally be performed while the ignition of the vehicle is off. Thus, in some embodiments, the determining of when the vehicle maintenance event occurred may comprise operating the at least one processor to identify binary vehicle status indicator changes, time-logged telematics data meeting the predetermined condition, and/or the vehicle service indicator occurring during an ignition cycle (e.g., while the vehicle ignition is off between two periods when the vehicle ignition is on). In such embodiments, indicators that occur when the vehicle ignition is on may be removed from consideration, as such indicators may be attributed to noise in the telematics data.

Referring again to FIG. 4, at operation 430 it is shown that a location of each of the plurality of vehicles at a time at which the vehicle maintenance event occurred may be determined using the telematics data. As described herein, the telematics data may include geospatial data associated with each of the plurality of vehicles. The geospatial data may indicate, among other things, a location of the vehicle at a given time (e.g., GPS coordinates). A location of a vehicle at the time of a maintenance event may therefore be determined. For example, one or more of the processors 112, 132, 152 may determine a time a which a vehicle maintenance event occurred and determine a location of the vehicle at that time. As will be appreciated, a vehicle maintenance event occurring at a given location may indicate that that location could be a service center.

However, as indicated above, the data produced by a vehicle may have noise therein - i.e., may include noisy data. Thus, it may in some cases be useful to mitigate the effect that noisy data has on the determination of the location of where a vehicle maintenance event occurred. For example, in addition to, or alternatively to, the techniques described above, the determining of the location of the vehicle maintenance event may involve taking into account a location of the vehicle immediately before and/or after the time at which the vehicle maintenance event occurred.

For instance, in some embodiments, the determining of the location of the vehicle maintenance event comprises operating the at least one processor to: identify a first location reported immediately before when the binary vehicle status indicator change occurred, the time-logged engine data meets the predetermined condition, and/or the vehicle service indicator has occurred; identify a second location reported when, or immediately after, the binary vehicle status indicator change occurred, the time-logged engine data meets the predetermined condition, and/or the vehicle status indicator has occurred; and determine the location of the vehicle maintenance event based on whether the first location and the second location are within a selected distance of each other. Such embodiments may remove from consideration false positive vehicle maintenance events (e.g., caused by noise in the data), as well as other types of vehicle maintenance events (e.g., road-side assistance), as vehicles being maintained at a service center generally may not experience a change in location immediately therebefore and thereafter.

Further, it is noted that the first location and/or the second location may comprise a plurality of locations. For example, the identifying of the primary location may comprise operating the at least one processor to identify a primary first location reported immediately before when the binary vehicle status indicator change occurred, the time-logged engine data meets the predetermined condition, and/or the vehicle service indicator has occurred and a secondary first location reported immediately before the first primary location. By using multiple locations, further confirmation may be provided that a vehicle maintenance event occurred at a service center and is not a false positive due to noisy a data and/or a vehicle maintenance event that occurred at a location other than a service center (e.g., road-side assistance).

Furthermore, other types of telematics data may be used to reduce the likelihood of false positives caused by noisy a data and/or a vehicle maintenance event that occurred at a location other than a service center. For example, in some embodiments, the determining of the location may additionally comprise operating the at least one processor to identify an end cycle location of an immediately preceding ignition cycle and a starting cycle location of a current ignition cycle (i.e., during which the binary vehicle status indicator change occurred, the time-logged engine data meets the predetermined condition, and/or the vehicle service indicator has occurred), and determining the location of the vehicle maintenance event based on whether the first location, the second location, the end cycle location, and the starting cycle location are within a selected distance of each other.

It is also noted that the selected distance within which the primary location and the secondary location are located may be any suitable distance. As will be appreciated, a vehicle's actual location may be different than that which is recorded by, for example, a GPS receiver due to "GPS drift". GPS drift may in some cases cause a difference of up to about 100m between a vehicle's actual location and a reported GPS position thereof. Thus, it may be useful to account for such phenomena by determining whether the primary location and the secondary location are within a corresponding distance of each other - e.g., within about 200 m of each other. Of course, other distances may be selected based on the particular needs of a user. As well, or alternatively, to account for GPS drift, in some embodiments, a plurality of potential vehicle maintenance event locations (e.g., the first location, the second location, the end cycle location, and the start cycle location) may be averaged, thereby reducing the effect the GPS drift.

As a further example, the length of an ignition cycle (e.g., a vehicle ignition switching from on to off to on again) during which a vehicle maintenance event appears to occur may also be indicative of a false positive identification of a vehicle maintenance event. In more detail, maintaining a vehicle at a service center generally involves the vehicle ignition being turned off for an extended period of time while the maintenance occurs. Thus, if a vehicle maintenance event appears to have occurred during a particularly short ignition cycle (e.g., 1 min, 2 min, 3 min, or more, or less, or any time therebetween), that vehicle maintenance event may be a false positive resulting from, for example, noisy data. In some embodiments, the determining of the location of the vehicle maintenance event is based on an ignition cycle duration of the vehicle being greater than or equal to a predetermined time threshold. The predetermined threshold may be any suitable threshold (e.g., 30 min, 1 hour, 2 hours, or more time, or less time, or any duration therebetween) that would allow for the vehicle maintenance event or events to occur. In a further embodiment, the predetermined time threshold may be selected based on the type or types of vehicle maintenance events that occurred. For example, the time it takes to install a new battery may be less than that required to change a vehicle's engine oil and therefor may afford a lower predetermined time threshold to indicate that the maintenance has been completed.

As shown at operation 440 of the method 400, one or more service centers may be identified by applying to a plurality of maintenance event locations a clustering model and classifying one or more clusters of maintenance event locations as a service center. In more detail, each location at which a vehicle maintenance event is determined to occur may be referred to a maintenance event location. Maintenance event locations that are proximal to other maintenance event locations may be clustered together by a clustering model (e.g., applied by one or more of the processors 112, 132, 152) to identify one or more clusters of maintenance event locations. Each cluster of maintenance event locations may include a plurality of maintenance event locations for a plurality of vehicles and therefore may therefore correspond to an area that could be a location of a vehicle service center, as such locations may generally include a plurality of vehicle maintenance events for a plurality of vehicles occurring thereat.

The clustering model applied to the plurality of maintenance event locations may comprise any suitable model and/or algorithm. For example, in some embodiments, the clustering model may comprise a density-based clustering algorithm such as, but not limited to, DBSCAN, HDBSCAN, OPTICS, and the like. Of course, the clustering model may comprise other types of clustering algorithms if so desired (e.g., a distribution-based clustering algorithm and/or a centroid based clustering algorithm). In some embodiments, the clustering model may comprise a plurality of clustering models of the same or different types.

Once any clusters of maintenance event locations are identified, one or more of the clusters may be classified as a service center, or not. In some embodiments, one or more of the clusters of maintenance event locations may be classified as a service center by comparing (e.g., by operating one or more of the processors 112, 132, 152) the locations of each of the clusters to labelled service center locations. In such embodiments, if a cluster of maintenance event locations is found to overlap with a labelled service center location (e.g., an overlap, based on area, of 25%, 50% 75%, or more, or less, or any percentage therebetween), that cluster may be classified as a service center. The labelled service center locations may be provided, for example, by map data provided by map information providers such as OpenStreetMaps (OSM), by users of the systems and methods of the present disclosure (i.e., user-submitted labels), etc.

In some embodiments, the classifying of the one or more clusters of maintenance event locations as a service center may comprise operating the at least one processor to use a machine learning model trained using one or more vehicle maintenance features. In such embodiments, the machine learning model may classify each cluster of maintenance event locations as a service center, or not, based on vehicle maintenance features associated therewith. The machine learning model may be any suitable machine learning model, algorithm, or combination thereof. For example, the machine learning model may comprise a classifier (e.g., a random forest model), an anomaly detection model (e.g., an isolation forest model), and/or the like. Such embodiments may be useful, the classifying of the one or more cluster of maintenance event locations (and, in turn, the method 400) may be performed automatically - i.e., without requiring input from a user.

The one or more vehicle maintenance features that may be used by the machine learning model to classify each of the one or more clusters of vehicle maintenance locations may comprise features relating to maintenance of a particular vehicle or vehicles, vehicle maintenance events at the location of the cluster, etc. For example, in some embodiments, the one or more vehicle maintenance features may comprise: a number of distinct vehicles having one or more vehicle maintenance events occur at the maintenance event location, an average time spent by the vehicles at the maintenance event location, an average vehicle ignition cycle time of the vehicles at the maintenance event location, a number of distinct vehicle maintenance event types occurring at the maintenance event location, a number of vehicle maintenance events occurring within a selected time period at the maintenance event location, a percentage of time within which a vehicle maintenance event occurs at the maintenance event location, or a combination thereof.

The inventors of the present disclosure found that the above-exemplified vehicle maintenance features may be particularly useful for classifying clusters of vehicle maintenance event locations as vehicle service centers or not.

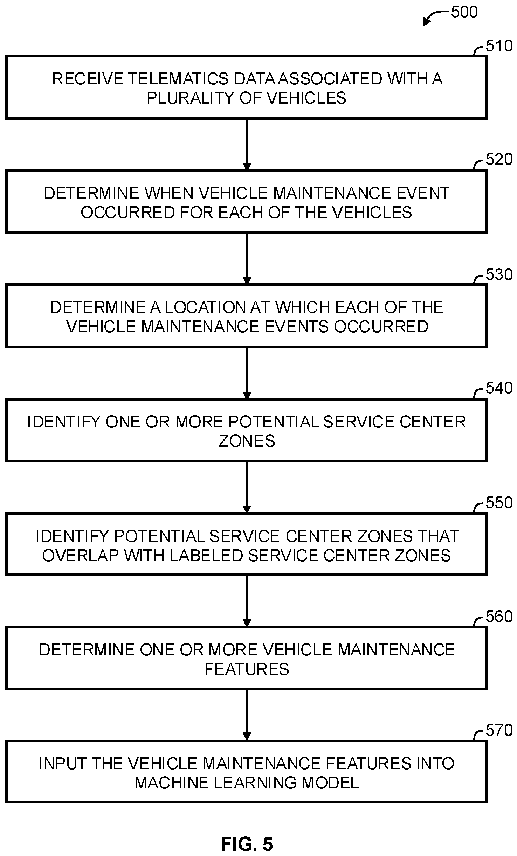

In light of the above, it may in some cases also be useful to train a machine learning model to identify service centers. Thus, the present disclosure also relates to systems and methods for training a machine learning model to identify a service center. One example of a method for training a machine learning model to identify a service center (500) is illustrated in FIG. 5, wherein the method 500 comprises operating at least one processor to: receive telematics data telematics data originating from a plurality of telematics devices installed in a plurality of vehicles, the telematics data comprising at least engine data and geospatial data associated with each of the plurality of vehicles (510); determine for each of the plurality of vehicles, using the engine data, when a vehicle maintenance event has occurred by identifying at least a binary vehicle status indicator change, time-logged telematics data that meets a predetermined condition, a vehicle service indicator, or a combination thereof (520); determine, using the telematics data, a location of each of the plurality of vehicles at a time at which the vehicle maintenance event occurred (530); identify one or more potential service center zones at least in part by applying to a plurality of maintenance event locations a clustering model (540); identify each of the one or more potential service center zones that overlaps with a labelled service center zone (550); determine one or more vehicle maintenance features based on each of the one or more potential service center zones that overlaps with the labelled service center zone (560); and input the one or more vehicle maintenance features into the machine learning model to thereby train the machine learning model to identify service centers based on the one or more vehicle maintenance features (570).

The method 500 may be implemented in the same manner as the method 400 - e.g., using any suitable combination of hardware and software such as those described in reference to FIG. 1 to FIG. 3. Further, it is also noted that the operations 510, 520, 530 of the method 500 may be implemented and/or executed in the same manner as described above in relation to the operations 410, 420, 430 of the method 400 respectively.

Referring now to operation 540 of the method 500, it is shown that one or more potential service center zones may be identified at least in part by application to a plurality of maintenance event locations a clustering model. Each potential service center zone may be an area at which a service center could be located, based on the presence of a cluster of maintenance events.

As will be appreciated, the plurality of maintenance event locations may be identified when determining the location of each of the plurality of vehicles at the time at which an experienced vehicle maintenance event occurs. Once identified, a cluster model may be applied to the plurality of maintenance event locations to identify clusters of maintenance event locations that may correspond to potential service center zones. The particular clustering model employed may be, for example, one or more of those described herein in relation to the method 400.

As shown at operation 550 of the method 500, one or more potential service center zones that overlap with a labelled service center zone (i.e., an area that is known to include, or correspond to, a service center) may be identified. The overlap may be determined by operating the at least one processor (e.g., one or more of the processors 112, 132, 152) to compare an area encompassed by each potential service center zone with an area encompassed by one or more labelled service center zones. A potential service center zone may be considered to overlap with a labelled surface center zone based on, for example, a percentage of the area of the potential service center zone that overlaps with that of the labeled service center zone being greater than a predetermined threshold. For example, if at least 25%, 50%, 75%, or more, or less, or any percentage therebetween, of an area of a potential service center zone overlaps with a labeled service center zone, that potential service center zone may be considered to overlap with that labeled service center zone.

The labelled service center zones may be provided using any suitable technique. For example, as described herein, in some embodiments, the at least one processor may be further operated to receive map data (e.g., from OSM), that comprises the labelled service center zones. Additionally, or alternatively, the at least one processor may be further operated to receive user-submitted labelled service center zones (i.e., zones that have been identified as corresponding to, or including, a service center by a user such as a vehicle operator, vehicle fleet manager, etc.).

As shown at operation 560 of the method 500, one or more vehicle maintenance features based on each of the one or more potential service center zones that overlaps with a labelled service center zone may be determined. As described herein, such features may include those relating to maintenance of a particular vehicle or vehicles, vehicle maintenance events at the location of the cluster, and the like.

The one or more vehicle maintenance features may be determined using any suitable technique. For example, the one or vehicle maintenance features may be determined by operating the at least one processor to identify commonalities between the vehicle maintenance events occurring at the potential service center zones that overlap with a labelled service center zone that may be indicative of the presence of a service center. Additionally, or alternatively, the at least one processor may be operated to perform feature engineering, using the vehicle maintenance events that occurred at each potential service center zone that overlaps with a labelled service center zone, via a machine learning model such as a semi-supervised machine learning model, a supervised machine learning model, a deep-learning neural network, etc.

As shown at operation 570 of the method 500, the one or more vehicle maintenance features may be input into the machine learning model (i.e., the machine learning model to be trained) to thereby train the machine learning model to identify the service centers based on the one or more vehicle maintenance features. In more detail, and as will be appreciated, as a machine learning model is fed training data (e.g., the one or more vehicle maintenance features), the model may become "trained" over time such that the model may become more efficient, more accurate, etc. at identifying, e.g., a service center based the one or more vehicle maintenance features. The machine learning model to be trained may be those described above in relation to the method 400 that may be useful for classifying potential service center zones as service centers - e.g., a classifier such as a random forest model, an anomaly detection model such as an isolation forest model, and/or the like.

As indicated above, machine learning models may be trained over time. Thus, it may in some cases be useful to determine whether the training thereof is effective - i.e., the machine learning model is becoming more efficient, more accurate, etc. For example, in some embodiments, the method 400 may further comprise operating the at least one processor to validate the machine learning model by: identifying, using the machine learning model, one or more service center locations; and determining whether each of the one or more service center locations overlaps with a labelled service center zone location. As will be appreciated, in such embodiments, if a service center location identified by the machine learning model sufficiently overlaps (e.g., a percentage of area thereof that overlaps being greater than a predetermined threshold) with a labelled service center, such an identification may be considered "correct". If the machine learning model correctly identifies a sufficient number (e.g., 10, 20, 30, or more, or less, or any number therebetween) of service centers, the machine learning model may be validated. On the other hand, if a non-sufficient number of service centers are correctly identified, the machine learning model may be determined to require more training (i.e., require more training data to be input). Of course, other machine learning validation techniques are possible and are contemplated.

As will be appreciated, as a machine learning model is used, additional features that may be used for classification (e.g., the one or more vehicle maintenance features) may be identified, and/or previously-identified features may be determined to not be useful for classification. Thus, it may in some cases be useful to update the one or more vehicle maintenance features over time, as the machine learning model processes more and more data. For example, in some embodiments, the method 400 may further comprise operating the at least one processor to update the one or more vehicle maintenance features based on each of the one or more service center locations (e.g., the validated results described above) that overlap with a labelled service center zone. That is, the one or more vehicle maintenance features may be updated based on features used by the machine learning model to correctly identify service center locations. It will also be appreciated that, in some cases, it may be useful to validate and update the model continuously so that the machine learning model remains or becomes more accurate over time. Thus, in some embodiments, the method 400 may further comprise operating the at least one processor to repeat the validation of the machine learning model and the updating of the one or more vehicle maintenance features at a predetermined cadence (e.g., hourly, daily, weekly, monthly, yearly, etc.).

In the present disclosure, all terms referred to in singular form are meant to encompass plural forms of the same. Likewise, all terms referred to in plural form are meant to encompass singular forms of the same. Unless defined otherwise, all technical and scientific terms used herein have the same meaning as commonly understood by one of ordinary skill in the art to which this disclosure pertains.

As used herein, the term "about" refers to an approximately +/-10 % variation from a given value. It is to be understood that such a variation is always included in any given value provided herein, whether or not it is specifically referred to.

It should be understood that the compositions and methods are described in terms of "comprising," "containing," or "including" various components or steps, the compositions and methods can also "consist essentially of or "consist of the various components and steps. Moreover, the indefinite articles "a" or "an," as used in the claims, are defined herein to mean one or more than one of the element that it introduces.

Throughout this specification and the appended claims, infinitive verb forms are often used, such as "to operate" or "to couple". Unless context dictates otherwise, such infinitive verb forms are used in an open and inclusive manner, such as "to at least operate" or "to at least couple".

For the sake of brevity, only certain ranges are explicitly disclosed herein. However, ranges from any lower limit may be combined with any upper limit to recite a range not explicitly recited, as well as, ranges from any lower limit may be combined with any other lower limit to recite a range not explicitly recited, in the same way, ranges from any upper limit may be combined with any other upper limit to recite a range not explicitly recited. Additionally, whenever a numerical range with a lower limit and an upper limit is disclosed, any number and any included range falling within the range are specifically disclosed. In particular, every range of values (of the form, "from about a to about b," or, equivalently, "from approximately a to b," or, equivalently, "from approximately a-b") disclosed herein is to be understood to set forth every number and range encompassed within the broader range of values even if not explicitly recited. Thus, every point or individual value may serve as its own lower or upper limit combined with any other point or individual value or any other lower or upper limit, to recite a range not explicitly recited.

The Drawings are not necessarily to scale and may be illustrated by phantom lines, diagrammatic representations, and fragmentary views. In certain instances, details that are not necessary for an understanding of the exemplary embodiments or that render other details difficult to perceive may have been omitted.

The specification includes various implementations in the form of block diagrams, schematics, and flowcharts. A person of skill in the art will appreciate that any function or operation within such block diagrams, schematics, and flowcharts can be implemented by a wide range of hardware, software, firmware, or combination thereof. As non-limiting examples, the various embodiments herein can be implemented in one or more of: application-specific integrated circuits (ASICs), standard integrated circuits (ICs), programmable logic devices (PLDs), field-programmable gate arrays (FPGAs), computer programs executed by any number of computers or processors, programs executed by one or more control units or processor units, firmware, or any combination thereof.

The disclosure includes descriptions of several processors. Said processors can be implemented as any hardware capable of processing data, such as application-specific integrated circuits (ASICs), standard integrated circuits (ICs), programmable logic devices (PLDs), field-programmable gate arrays (FPGAs), logic circuits, or any other appropriate hardware. The disclosure also includes descriptions of several non-transitory processor-readable storage mediums. Said non-transitory processor-readable storage mediums can be implemented as any hardware capable of storing data, such as magnetic drives, flash drives, RAM, or any other appropriate data storage hardware. Further, mention of data or information being stored at a device generally refers to the data information being stored at a non-transitory processor-readable storage medium of said device.

Therefore, the present disclosure is well adapted to attain the ends and advantages mentioned as well as those that are inherent therein. The particular embodiments disclosed above are illustrative only, as the present disclosure may be modified and practiced in different but equivalent manners apparent to those skilled in the art having the benefit of the teachings herein. Although individual embodiments are dis-cussed, the disclosure covers all combinations of all those embodiments. Furthermore, no limitations are intended to the details of construction or design herein shown, other than as described in the claims below. Also, the terms in the claims have their plain, ordinary meaning unless otherwise explicitly and clearly defined by the patentee. It is therefore evident that the particular illustrative embodiments disclosed above may be altered or modified and all such variations are considered within the scope and spirit of the present disclosure. If there is any conflict in the usages of a word or term in this specification and one or more patent(s) or other documents that may be incorporated herein by reference, the definitions that are consistent with this specification should be adopted.

Many obvious variations of the embodiments set out herein will suggest themselves to those skilled in the art in light of the present disclosure. Such obvious variations are within the full intended scope of the appended claims.

## Claims

1. A system for identifying a service center, the system comprising:
at least one data storage operable to store telematics data originating from a plurality of telematics devices installed in a plurality of vehicles; and
at least one processor in communication with the at least one data storage, the at least one processor operable to:
receive the telematics data;
determine for each of the plurality of vehicles, using the telematics data, when a vehicle maintenance event has occurred by identifying at least a binary vehicle status indicator change, time-logged telematics data that meets a predetermined condition, a vehicle service indicator, or a combination thereof;
determine, using the telematics data, a location of each of the plurality of vehicles at a time at which the vehicle maintenance event occurred; and
identify one or more service centers by:
applying to a plurality of maintenance event locations a clustering model, and
classifying one or more clusters of maintenance event locations as a service center.

2. The system of claim 1, wherein:
the at least one processor is operable to identify the binary vehicle status indicator change by identifying a change in vehicle warning lights, a change in diagnostic trouble codes (DTCs), or a combination thereof;
the time-logged telematics data comprises engine oil quality data, battery data, fluid level data, or a combination thereof; and/or
the vehicle service indicator comprises a vehicle diagnosis indicator, a vehicle tow indicator, or a combination thereof.

3. The system of claim 1, wherein the binary vehicle status indicator change, the time-logged telematics data meeting the predetermined condition occur, and/or the vehicle service indicator occur during an ignition cycle.

4. The system of claim 1, wherein the at least one processor is operable to determine the location of the vehicle maintenance event by:
identifying a first location reported immediately before when the binary vehicle status indicator change occurred, the time-logged engine data meets the predetermined condition, and/or the vehicle service indicator has occurred, and a second location reported when, or immediately after, the binary vehicle status indicator change occurred, the time-logged engine data meets the predetermined condition, and/or the vehicle service indicator has occurred, and
determining the location of the vehicle maintenance event based on whether the first location and the second location are within a selected distance of each other, based on an average location of the first location and the second location, or a combination thereof.

5. The system of claim 7, wherein the at least one processor is further operable to determine the location of vehicle maintenance event by:
identifying an end cycle location of an immediately preceding ignition cycle and a starting cycle location of a current ignition cycle; and
determining the location of the vehicle maintenance event based on whether the first location, the second location, the end cycle location, and the starting cycle location are within a selected distance of each other, based on an average location of the first location, the second location, the end cycle location, and the starting cycle location, or a combination thereof.

6. The system of claim 1, wherein the at least one processor is operable to determine the location of the vehicle maintenance event based on an ignition cycle duration of the vehicle being greater than or equal to a predetermined time threshold.

7. The system of claim 1, wherein the at least one processor is operable to classify the one or more clusters of maintenance event locations as a service center using a machine learning model trained using one or more vehicle maintenance features, the one or more vehicle maintenance features comprising a number of distinct vehicles having one or more vehicle maintenance events occur at the maintenance event location, an average time spent by the vehicles at the maintenance event location, an average vehicle ignition cycle time of the vehicles at the maintenance event location, a number of distinct vehicle maintenance event types occurring at the maintenance event location, a number of vehicle maintenance events occurring within a selected time period at the maintenance event location, a percentage of time within which a vehicle maintenance event occurs at the maintenance event location, or a combination thereof.

8. A method for identifying a service center, the method comprising operating at least one processor to:
receive telematics data originating from a plurality of telematics devices installed in a plurality of vehicles;
determine for each of the plurality of vehicles, using the telematics data, when a vehicle maintenance event has occurred by identifying at least a binary vehicle status indicator change, time-logged telematics data that meets a predetermined condition, a vehicle service indicator, or a combination thereof;
determine, using the telematics data, a location of each of the plurality of vehicles at a time at which the vehicle maintenance event occurred; and
identify one or more service centers by:
applying to a plurality of maintenance event locations a clustering model, and
classifying one or more clusters of maintenance event locations as a service center.

9. The method of claim 8, wherein:
the binary vehicle status indicator change comprises a change in vehicle warning lights, a change in diagnostic trouble codes (DTCs), or a combination thereof;
the time-logged telematics data comprises engine oil quality data, battery data, fluid level data, or a combination thereof; and/or
the vehicle service indicator comprises a vehicle diagnosis indicator, a vehicle tow indicator, or a combination thereof.

10. The method of claim 8, wherein the binary vehicle status indicator change, the time-logged telematics data meeting the predetermined condition occur, and/or the vehicle service indicator occur during an ignition cycle.

11. The method of claim 8, wherein the determining of the location of the vehicle maintenance event comprises operating the at least one processor to:
identify a first location reported immediately before when the binary vehicle status indicator change occurred, the time-logged engine data meets the predetermined condition, and/or the vehicle service indicator has occurred, and a second location reported when, or immediately after, the binary vehicle status indicator change occurred, the time-logged engine data meets the predetermined condition, and/or the vehicle service indicator has occurred, and
determine the location of the vehicle maintenance event based on whether the first location and the second location are within a selected distance of each other, based on an average location of the first location and the second location, or a combination thereof.

12. The method of claim 11, wherein the determining of the location of the vehicle maintenance event further comprises operating the at least one processor to:
identify an end cycle location of an immediately preceding ignition cycle and a starting cycle location of a current ignition cycle; and
determine the location of the vehicle maintenance event based on whether the first location, the second location, the end cycle location, and the starting cycle location are within a selected distance of each other, based on an average location of the first location, the second location, the end cycle location, and the starting cycle location, or a combination thereof.

13. The method of claim 8, wherein the determining of the location of the vehicle maintenance event is based on an ignition cycle duration of the vehicle being greater than or equal to a predetermined time threshold.

14. The method of claim 8, wherein the classifying of the one or more clusters of maintenance event locations as the service center comprises operating the at least one processor to use a machine learning model trained using one or more vehicle maintenance features, the one or more vehicle maintenance features comprising a number of distinct vehicles having one or more vehicle maintenance events occur at the maintenance event location, an average time spent by the vehicles at the maintenance event location, an average vehicle ignition cycle time of the vehicles at the maintenance event location, a number of distinct vehicle maintenance event types occurring at the maintenance event location, a number of vehicle maintenance events occurring within a selected time period at the maintenance event location, a percentage of time within which a vehicle maintenance event occurs at the maintenance event location, or a combination thereof.

15. A non-transitory computer-readable medium having instructions stored thereon executable by at least one processor to implement a method for identifying a service center, the method comprising operating the at least one processor to:
receive telematics data originating from a plurality of telematics devices installed in a plurality of vehicles;
determine for each of the plurality of vehicles, using the telematics data, when a vehicle maintenance event has occurred by identifying at least a binary vehicle status indicator change, time-logged telematics data that meets a predetermined condition, a vehicle service indicator, or a combination thereof;
determine, using the telematics data, a location of each of the plurality of vehicles at a time at which the vehicle maintenance event occurred; and
identify one or more service centers by:
applying to a plurality of maintenance event locations a clustering model, and
classifying one or more clusters of maintenance event locations as a service center.
